# EUROPEAN PATENT APPLICATION

(11) **EP 4 681 995 A1**
(43) Date of publication of application: **21.01.2026**
(21) Application number: 24774895.7
(22) Date of filing: 18.03.2024
(51) Int. Cl.: B60R 99/00, B60W 30/10, B62D 6/00, B62D 101/00, B62D 113/00

(54) **VEHICLE CONTROL DEVICE**

(30) Priority: 17.03.2023 JP 2023042580
(71) Applicant: AISIN CORPORATION, Kariya-shi, Aichi 448-8650 (JP)
(72) Inventor: SATO, Daisuke, Kariya-shi, Aichi 448-8650 (JP); OGINO, Atsuto, Kariya-shi, Aichi 448-8650 (JP)
(74) Representative: TBK
(86) International application number: PCT/JP2024/010459
(87) International publication number: WO 2024/195759

(57) **Abstract**

A vehicle control device of an embodiment is a vehicle control device that causes a vehicle to travel along a target route created by connecting a plurality of types of lines, and the vehicle control device includes a target curvature calculation unit that calculates a smoothed value of target curvatures of a plurality of points on the target route including a calculation target point and a predetermined number of points before and after the calculation target point, any one of the points being a joint of different types of lines, in order to calculate a smoothed target curvature for the calculation target point, a target steering angle calculation unit that calculates a target steering angle based on the smoothed target curvature, and a control unit that controls steering based on the target steering angle when the vehicle travels.

## Description

### TECHNICAL FIELD

Embodiments of the present invention relate to a vehicle control device.

### BACKGROUND ART

Conventionally, a technique of causing a vehicle to travel along a target route has been developed. In this case, the target route is created by connecting a plurality of types of lines such as a straight line, an arc, and a clothoid curve.

### CITATION LIST

### PATENT LITERATURE

Patent Literature 1: JP 2017-30482 A

### SUMMARY OF INVENTION

### TECHNICAL PROBLEMS

However, in the conventional technique described above, in a case where steering control is executed at a joint (for example, a joint of a clothoid curve and an arc, or the like) of different types of lines on a target route, the target curvature gradient (first order differential value of a target curvature) changes stepwise, so that smooth steering is not performed, and ride comfort may be degraded.

Therefore, the present invention has been made in view of the above circumstances, and the present invention provides a vehicle control device capable of achieving smooth steering before and after a joint of different types of lines on a target route when a vehicle travels along the target route.

### SOLUTIONS TO PROBLEMS

In order to solve the above problem, a vehicle control device of an embodiment is a vehicle control device that causes a vehicle to travel along a target route created by connecting a plurality of types of lines, and the vehicle control device includes a target curvature calculation unit that calculates a smoothed value of target curvatures of a plurality of points on the target route including a calculation target point and a predetermined number of points before and after the calculation target point, any one of the points being a joint of different types of lines, in order to calculate a smoothed target curvature for the calculation target point, a target steering angle calculation unit that calculates a target steering angle based on the smoothed target curvature, and a control unit that controls steering based on the target steering angle when the vehicle travels.

According to the above configuration, in a case where the vehicle travels along the target route, steering control is executed using the target steering angle based on the smoothed target curvature, so that smooth steering can be achieved before and after the joint of different types of lines on the target route.

In addition, in the vehicle control device, the target curvature calculation unit calculates, as the smoothed target curvature, an average value of target curvatures at the plurality of points or a weighted average value of the target curvatures acquired by weighting the target curvatures at the plurality of points and calculating a weighted average value of the target curvatures.

According to the above configuration, the steering control using the target steering angle based on the average value or the weighted average value of the target curvature can be executed by simple processing.

Furthermore, in the vehicle control device, when determining positions of the plurality of points, the target curvature calculation unit determines, as a position of an adjacent point, a position advanced by a distance obtained by multiplying a vehicle speed by a preset predetermined time based on the calculation target point, and repeats this calculation in order to determine the positions of the plurality of points.

According to the above configuration, appropriate positions of the plurality of points can be specifically determined.

Moreover, in the vehicle control device, the target curvature calculation unit uses a target vehicle speed as the vehicle speed.

Since the target vehicle speed is more stable than the actual vehicle speed, according to the above configuration, the calculation result can be more stable by using the target vehicle speed as the vehicle speed.

### BRIEF DESCRIPTION OF DRAWINGS

FIG. 1 is an exemplary perspective view illustrating a state where a part of a vehicle cabin of a vehicle according to an embodiment is seen through.
FIG. 2 is an exemplary plan view (bird's-eye view) of the vehicle according to the embodiment.
FIG. 3 is a diagram of an example of a dashboard of the vehicle according to the embodiment as viewed from the rear of the vehicle.
FIG. 4 is an exemplary block diagram of a configuration of a vehicle control system according to the embodiment.
FIG. 5 is a functional configuration diagram of an ECU according to the embodiment.
FIG. 6 is an explanatory diagram of calculation of an average target curvature in the embodiment.
FIG. 7 is a graph illustrating temporal transitions of a target curvature and a target curvature gradient according to a conventional technique.
FIG. 8 is a graph illustrating temporal transitions of a target curvature and a target curvature gradient according to the embodiment.
FIG. 9 is a flowchart illustrating processing performed by the vehicle control system according to the embodiment.

### DESCRIPTION OF EMBODIMENTS

Hereinafter, exemplary embodiments of the present invention are disclosed. The configurations of the embodiments described below, and the actions, results, and effects brought by the configurations are examples. The present invention can be implemented by configurations other than those disclosed in the following embodiments, and at least one of various effects based on the basic configuration and derivative effects can be obtained.

A vehicle 1 of the present embodiment may be, for example, an automobile using an internal combustion engine (not illustrated) as a drive source, that is, an internal combustion engine vehicle, an automobile using an electric motor (not illustrated) as a drive source, that is, an electric vehicle, a fuel cell vehicle, or the like, a hybrid vehicle using both of them as drive sources, or an automobile including another drive source. In addition, the vehicle 1 can be equipped with various transmission devices, and can be equipped with various devices necessary for driving the internal combustion engine and the electric motor, for example, systems, components, and the like. Moreover, the type, number, layout, and the like of devices related to driving of wheels 3 in the vehicle 1 can be variously set.

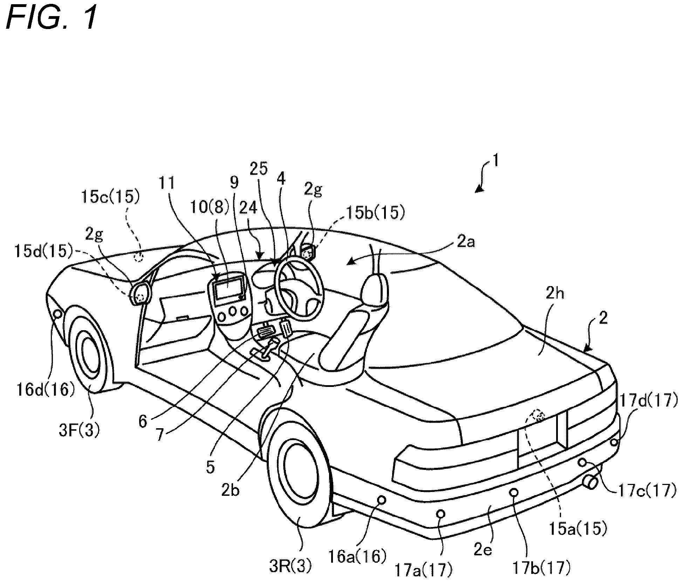

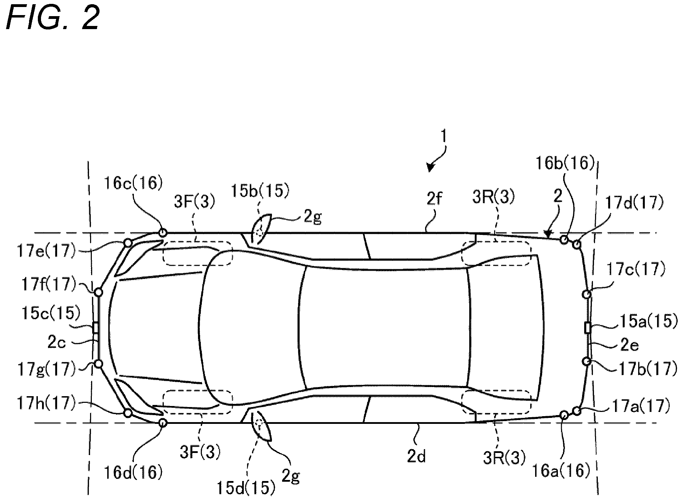

FIG. 1 is an exemplary perspective view illustrating a state where a part of a vehicle cabin of a vehicle according to an embodiment is seen through. FIG. 2 is an exemplary plan view (bird's-eye view) of the vehicle according to the embodiment.

As illustrated in FIG. 1, a vehicle body 2 constitutes a vehicle cabin 2a in which an occupant (not illustrated) rides. In the vehicle cabin 2a, a steering unit 4, an acceleration operation unit 5, a braking operation unit 6, a shift operation unit 7, and the like are provided in a state of facing a seat 2b of a driver as an occupant.

The steering unit 4 is, for example, a steering wheel protruding from a dashboard 24. The acceleration operation unit 5 is, for example, an accelerator pedal located at the feet of the driver. The braking operation unit 6 is, for example, a brake pedal located at the feet of the driver. The shift operation unit 7 is, for example, a shift lever protruding from a center console. Note that the steering unit 4, the acceleration operation unit 5, the braking operation unit 6, and the shift operation unit 7 are not limited thereto.

Furthermore, a display device 8 as a display output unit and a sound output device 9 as a sound output unit are provided in the vehicle cabin 2a. The display device 8 is, for example, a liquid crystal display (LCD), an organic electroluminescent display (OELD), or the like. The sound output device 9 is, for example, a speaker. In addition, the display device 8 is covered with a transparent operation input unit 10 such as a touch panel. The occupant can visually recognize an image displayed on the display screen of the display device 8 via the operation input unit 10. In addition, the occupant can perform an operation input by touching, pushing, or moving the operation input unit 10 with a finger or the like at a position corresponding to the image displayed on the display screen of the display device 8.

The display device 8, the sound output device 9, the operation input unit 10, and the like are provided, for example, in a monitor device 11 located at the center of the dashboard 24 in a vehicle width direction, that is, a left-right direction. The monitor device 11 can include operation input units (not illustrated) such as a switch, a dial, a joystick, and a push button. In addition, a sound output device (not illustrated) can be provided at another position in the vehicle cabin 2a, which is different from the position of the monitor device 11. Furthermore, sound can be output from the sound output device 9 of the monitor device 11 and another sound output device. Note that the monitor device 11 can also be used as, for example, a navigation system or an audio system.

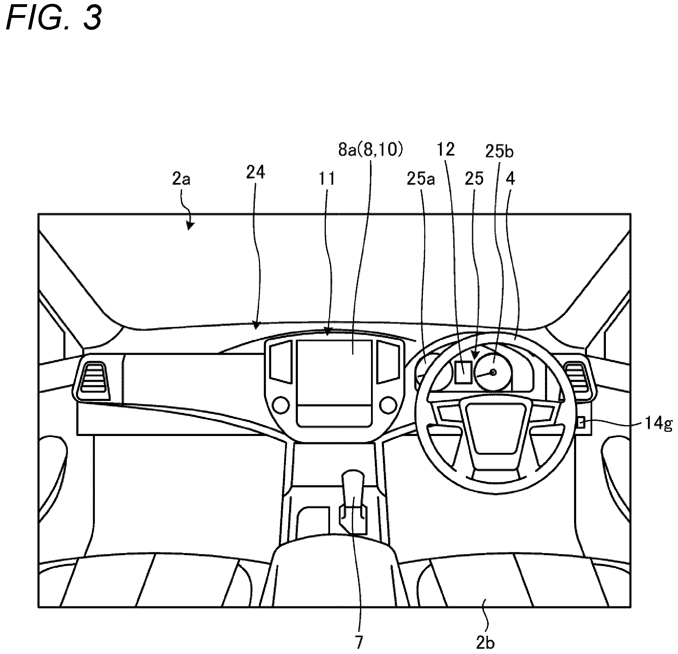

Furthermore, a display device 12 (see FIG. 3) different from the display device 8 is provided in the vehicle cabin 2a. FIG. 3 is a diagram of an example of a dashboard of the vehicle according to the embodiment as viewed from the rear of the vehicle. As illustrated in FIG. 3, the display device 12 is provided, for example, on an instrumental panel unit 25 of the dashboard 24, and is located between a speed indicator 25a and a rotation speed indicator 25b substantially at the center of the instrumental panel unit 25. The size of the screen of the display device 12 is smaller than the size of the screen (FIG. 1) of the display device 8. The display device 12 can mainly display an image indicating information related to travel control (for example, parking assistance control) of the vehicle 1. The amount of information displayed on the display device 12 may be smaller than the amount of information displayed on the display device 8. The display device 12 is, for example, an LCD, an OELD, or the like. Note that information displayed on the display device 12 may be displayed on the display device 8.

As illustrated in FIGS. 1 and 2, the vehicle 1 is, for example, a four-wheeled automobile, and includes two left and right front wheels 3F and two left and right rear wheels 3R. All of these four wheels 3 can be configured to be steerable.

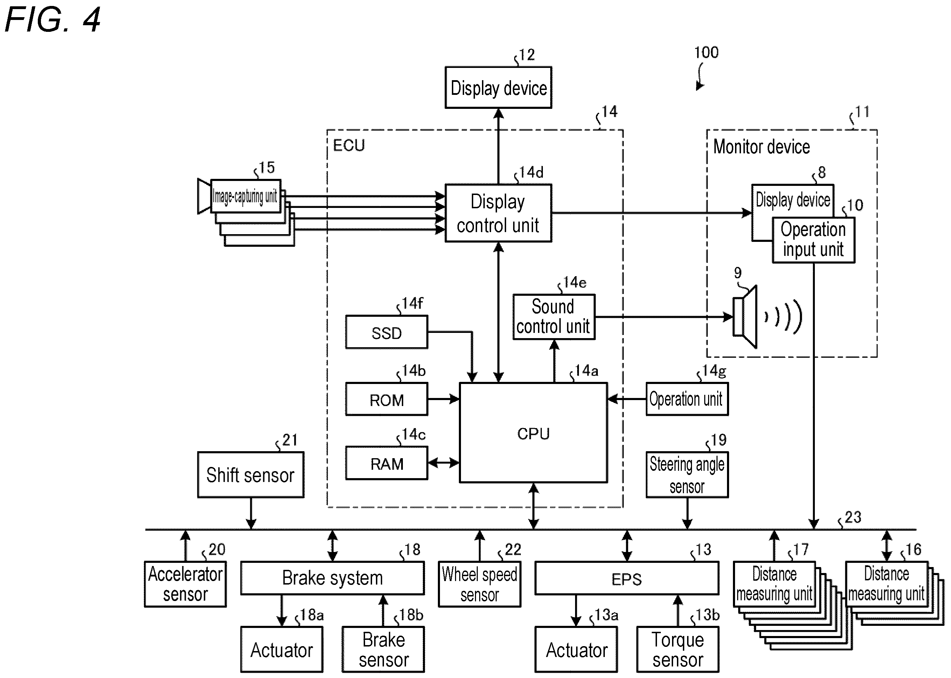

FIG. 4 is an exemplary block diagram of a configuration of a vehicle control system according to the embodiment. As illustrated in FIG. 4, the vehicle 1 includes an EPS 13 (electric power steering system) that steers at least two wheels 3. The EPS 13 includes an actuator 13a and a torque sensor 13b. The EPS 13 is electrically controlled by an electronic control unit (ECU) 14 or the like to operate the actuator 13a. In the following description, the EPS 13 is an electric power steering system, a steer by wire (SBW) system, or the like. The EPS 13 applies torque, that is, assist torque, to the steering unit 4 by the actuator 13a to supplement steering force, and steers the wheels 3 by the actuator 13a. In this case, the actuator 13a may steer one wheel 3 or may steer a plurality of wheels 3. In addition, the torque sensor 13b detects, for example, torque applied to the steering unit 4 by the driver.

As illustrated in FIG. 2, the vehicle body 2 includes, for example, four image-capturing units 15a to 15d as a plurality of image-capturing units 15. The image-capturing unit 15 is, for example, a digital camera incorporating an image-capturing element such as a charge coupled device (CCD) or a CMOS image sensor (CIS). The image-capturing unit 15 can output video data at a predetermined frame rate. Each of the image-capturing units 15 includes a wide-angle lens or a fisheye lens, and can capture a range of, for example, 140° to 190° in the horizontal direction. The optical axis of the image-capturing unit 15 is set obliquely downward. Therefore, the image-capturing unit 15 sequentially captures an external environment around the vehicle body 2 including a road surface on which the vehicle 1 can move and an area where the vehicle 1 can be parked, and outputs the captured environment as captured image data.

The image-capturing unit 15a is located, for example, on a rear end 2e of the vehicle body 2, and is provided on a lower wall portion of a door 2h of a rear trunk. The image-capturing unit 15b is located, for example, on a right end 2f of the vehicle body 2 and is provided on a right door mirror 2g. The image-capturing unit 15c is located, for example, on the front side of the vehicle body 2, that is, on a front end 2c in a vehicle front-rear direction, and is provided on a front bumper or the like. The image-capturing unit 15d is located, for example, on the left side of the vehicle body 2, that is, on a left end 2d in the vehicle width direction, and is provided on the door mirror 2g as a left protruding portion. The ECU 14 can perform arithmetic processing and image processing on the basis of image data obtained by the plurality of image-capturing units 15 to generate an image with a wider viewing angle or generate a virtual bird's-eye image (planar image) of the vehicle 1 as viewed from above.

Furthermore, the ECU 14 identifies, from the image captured by the image-capturing unit 15, a section line or the like indicated on the road surface around the vehicle 1, and detects (extracts) a parking lot indicated by the section line or the like.

As illustrated in FIGS. 1 and 2, the vehicle body 2 includes, for example, four distance measuring units 16a to 16d and eight distance measuring units 17a to 17h as a plurality of distance measuring units 16 and 17. The distance measuring units 16 and 17 are, for example, sonars that emit ultrasonic waves and capture reflected waves thereof. The sonar may also be referred to as a sonar sensor or an ultrasonic detector. The ECU 14 can measure the presence or absence of an object such as an obstacle located around the vehicle 1 and the distance to the object on the basis of the detection results of the distance measuring units 16 and 17. That is, the distance measuring units 16 and 17 are examples of a detection unit that detects an object. Note that the distance measuring unit 17 can be used, for example, to detect an object located at a relatively short distance, and the distance measuring unit 16 can be used, for example, to detect an object located at a relatively long distance farther than that in the distance measuring unit 17. Furthermore, the distance measuring unit 17 can be used, for example, to detect objects in front of and behind the vehicle 1, and the distance measuring unit 16 can be used to detect objects on the side of the vehicle 1.

As illustrated in FIG. 4, in a vehicle control system 100 that causes the vehicle to travel along a target route, not only the ECU 14, the monitor device 11, the EPS 13, the distance measuring units 16 and 17, and the like, but also a brake system 18, a steering angle sensor 19, an accelerator sensor 20, a shift sensor 21, a wheel speed sensor 22, and the like are electrically connected to each other via an in-vehicle network 23 as an electric communication line.

The in-vehicle network 23 is configured as, for example, a controller area network (CAN). The ECU 14 can control the EPS 13, the brake system 18, and the like by transmitting a control signal through the in-vehicle network 23. Furthermore, the ECU 14 can receive detection results of the torque sensor 13b, the brake sensor 18b, the steering angle sensor 19, the distance measuring unit 16, the distance measuring unit 17, the accelerator sensor 20, the shift sensor 21, the wheel speed sensor 22, and the like, operation signals of the operation input unit 10 and the like via the in-vehicle network 23.

As illustrated in FIG. 4, the ECU 14 includes, for example, a CPU 14a (central processing unit), a ROM 14b (read only memory), a RAM 14c (random access memory), a display control unit 14d, a sound control unit 14e, an SSD 14f (solid state drive, flash memory), and the like.

For example, the CPU 14a can execute various types of arithmetic processing and control such as image processing related to images displayed on the display devices 8 and 12, determination of a movement target position of the vehicle 1, calculation of a movement route of the vehicle 1, determination of presence or absence of interference with an object, automated control of the vehicle 1, and cancellation of the automated control. The CPU 14a can read a program installed and stored in a nonvolatile storage device such as the ROM 14b and execute arithmetic processing in accordance with the program.

The RAM 14c temporarily stores various types of data used in the calculation in the CPU 14a. In addition, the display control unit 14d mainly executes image processing using the image data obtained by the image-capturing unit 15, combination of the image data displayed on the display devices 8 and 12, and the like among the arithmetic processing in the ECU 14. Furthermore, the sound control unit 14e mainly executes processing of sound data output by the sound output device 9 among the arithmetic processing in the ECU 14. The SSD 14f is a rewritable nonvolatile storage unit, and can store data even in a case where the power supply of the ECU 14 is turned off.

Note that the CPU 14a, the ROM 14b, the RAM 14c, and the like can be integrated in the same package. Furthermore, the ECU 14 may have a configuration in which another logical operation processor such as a digital signal processor (DSP), a logic circuit, or the like is used instead of the CPU 14a. In addition, a hard disk drive (HDD) may be provided instead of the SSD 14f, and the SSD 14f and the HDD may be provided separately from the ECU 14.

The brake system 18 is, for example, an anti-lock brake system (ABS) that suppresses locking of a brake, an electronic stability control (ESC) that suppresses skidding of the vehicle 1 at the time of cornering, an electric brake system that enhances braking force (performs brake assist), a brake by wire (BBW), or the like. The brake system 18 applies braking force to the wheel 3 and thus the vehicle 1 via the actuator 18a.

In addition, the brake system 18 can execute various types of control by detecting the lock of the brake, idle rotation of the wheel 3, the sign of skidding, and the like from the rotational difference between the left and right wheels 3 and the like. The brake sensor 18b is, for example, a sensor that detects the position of a movable portion in the braking operation unit 6. The brake sensor 18b can detect a position of a brake pedal as the movable portion of the braking operation unit 6. The brake sensor 18b includes a displacement sensor.

The steering angle sensor 19 is, for example, a sensor that detects the steering amount of the steering unit 4 such as a steering wheel. The steering angle sensor 19 is configured using, for example, a Hall element or the like. The ECU 14 acquires the steering amount of the steering unit 4 by the driver, the steering amount of each wheel 3 at the time of automated steering, and the like from the steering angle sensor 19 and executes various types of control. Note that the steering angle sensor 19 detects the rotation angle of a rotating portion included in the steering unit 4. The steering angle sensor 19 is an example of an angle sensor.

The accelerator sensor 20 is, for example, a sensor that detects the position of a movable portion in the acceleration operation unit 5. The accelerator sensor 20 can detect a position of an accelerator pedal as the movable portion of the acceleration operation unit 5. The accelerator sensor 20 includes a displacement sensor.

The shift sensor 21 is, for example, a sensor that detects the position of a movable portion in the shift operation unit 7. The shift sensor 21 can detect positions of a lever, an arm, a button, and the like as movable portions of the shift operation unit 7. The shift sensor 21 may include a displacement sensor or may be configured as a switch.

The wheel speed sensor 22 is a sensor that detects the rotation amount and the rotation speed per unit time of the wheel 3. The wheel speed sensor 22 outputs the number of wheel speed pulses indicating the detected rotation speed as a sensor value. The wheel speed sensor 22 can be configured using, for example, a Hall element or the like. The ECU 14 calculates the movement amount of the vehicle 1 or the like on the basis of the sensor value acquired from the wheel speed sensor 22 and executes various types of control. Note that the wheel speed sensor 22 may be provided in the brake system 18. In this case, the ECU 14 acquires the detection result of the wheel speed sensor 22 via the brake system 18.

Note that the configurations, arrangements, electrical connection forms, and the like of the various types of sensors and actuators described above are merely examples, and can be variously set (changed).

In the present embodiment, the ECU 14 implements at least a part of the function as a vehicle control device by cooperation of hardware and software (control program). The vehicle control device causes the vehicle to travel along a target route created by connecting a plurality of types of lines. Note that the target route is created by connecting a plurality of types of lines such as a straight line, an arc, and a clothoid curve.

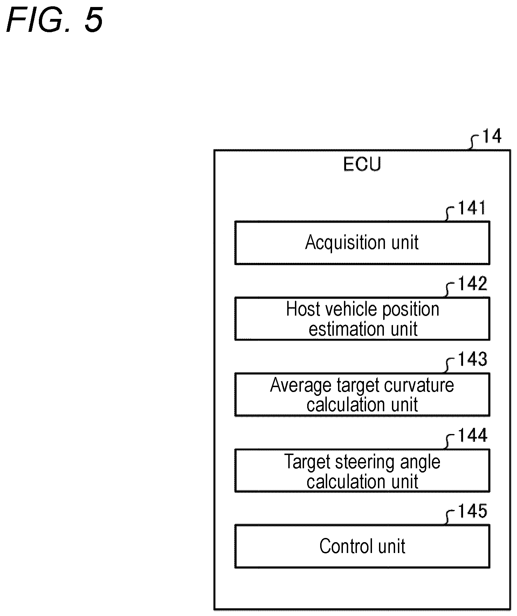

Hereinafter, the technique capable of achieving smooth steering before and after a joint of different types of lines on a target route in a case where such a vehicle 1 travels along the target route will be described with reference to FIGS. 5 to 9.

Note that, in the present invention, "smoothing (processing)" for a predetermined parameter refers to smoothing a change in gradient (first order differential value) for the parameter. Hereinafter, a target curvature in a case where the vehicle travels in a curve is taken as an example of the parameter.

For example, in a case where a route created by connecting a plurality of types of lines such as a straight line, an arc, and a clothoid curve is used, the curvature gradient at a joint always changes stepwise, and the change in curvature at that time is rapid. In this case, the change in curvature gradient can be smoothed by performing the smoothing processing in the section including the joint.

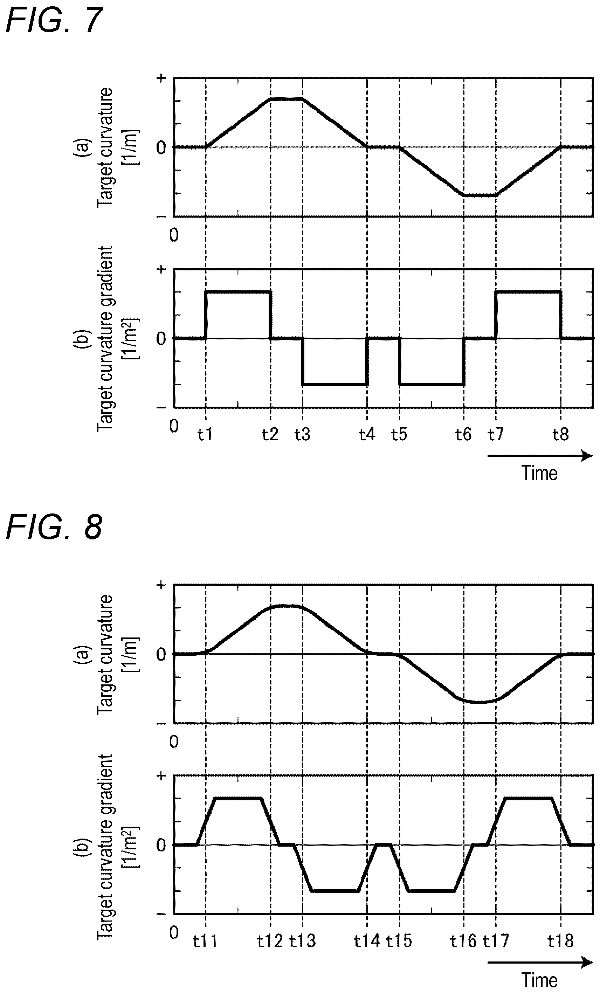

In this case, when the vertical axis represents the target curvature and the horizontal axis represents time, the curve of the target curvature after the smoothing processing is smoothly connected at the joint, that is, the curve has no corner. This will be described later with reference to FIGS. 7 and 8.

Hereinafter, a case of using averaging (processing) as an example of smoothing (processing) will be described. The smoothing (processing) is not limited to averaging (processing), and may be processing performed by other methods.

FIG. 5 is a functional configuration diagram of the ECU 14 according to the embodiment. The ECU 14 includes, as a functional configuration, an acquisition unit 141, a host vehicle position estimation unit 142, an average target curvature calculation unit 143, a target steering angle calculation unit 144, and a control unit 145.

The acquisition unit 141 acquires various types of information from various types of sensors and various types of storage units.

The host vehicle position estimation unit 142 estimates the current position of the vehicle 1 using the latest position information of the vehicle 1, the detection result by the wheel speed sensor 22, and the like.

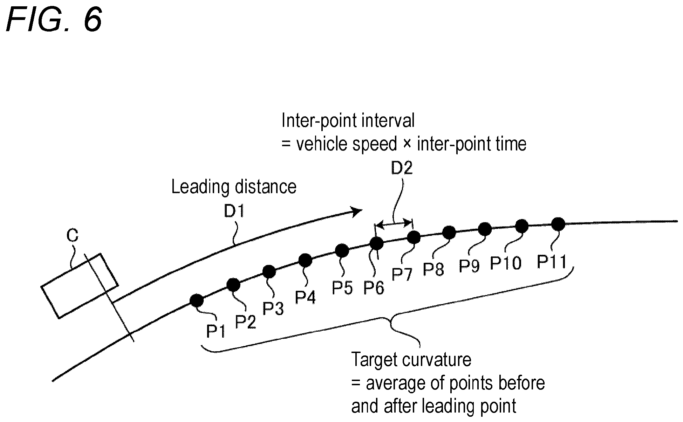

Hereinafter, the average target curvature calculation unit 143 will be described with reference to FIG. 6. FIG. 6 is an explanatory diagram of calculation of an average target curvature in the embodiment. The average target curvature calculation unit 143 calculates the average value of the target curvatures of a plurality of points (points P1 to P11) on the target route including a calculation target point (point P6) and a predetermined number (10) of points before and after the calculation target point, thereby calculating the average target curvature for the calculation target point (point P6).

Specifically, the average target curvature calculation unit 143 sets a position ahead of the current position (reference sign C) of the vehicle 1 by a leading distance (reference sign D1) as the calculation target point (point P6). The leading distance (reference sign D1) is set on the basis of response delay compensation information of the vehicle 1 or the like.

When determining the positions of the plurality of points (points P1 to P11), the average target curvature calculation unit 143 determines, as the position of the adjacent point, a position advanced by a distance (inter-point interval (reference sign D2)) obtained by multiplying a vehicle speed by a preset predetermined time (inter-point time) based on the calculation target point (point P6), and repeats this calculation to determine the positions of the plurality of points (points P1 to P11). Note that the inter-point time and the number of points to be acquired (11 points in the example of FIG. 6) are determined in consideration of the calculation cost and the like.

When the average target curvature is viewed in time series, the change (curvature gradient) becomes smooth, which also makes the steering control smooth and makes the ride comfortable (details will be described later).

Furthermore, the average target curvature calculation unit 143 may further weight the curvatures of a plurality of points including the point of the joint of the different types of lines and a predetermined number of points before and after the point of the joint, appropriately reflect the degree of influence on the target curvature, and then calculate the average target curvature by filtering such as adopting a weighted average value that is the average of the target curvatures in consideration of the weighting.

For example, the average target curvature calculation unit 143 may always calculate the average target curvature for the calculation target point while the vehicle 1 is traveling.

Furthermore, for example, the average target curvature calculation unit 143 may calculate the average target curvature for the calculation target point only when a plurality of points include the point of the joint (for example, joint of a clothoid curve and an arc, or the like) of different types of lines on the target route while the vehicle 1 is traveling.

The average target curvature calculation unit 143 may use the target vehicle speed as the vehicle speed in addition to the actual vehicle speed.

The target steering angle calculation unit 144 calculates a target steering angle on the basis of the average target curvature calculated by the average target curvature calculation unit 143. Specifically, for example, the target steering angle calculation unit 144 calculates the target steering angle on the basis of the target curvature and a curvature and steering angle map. The curvature and steering angle map is information indicating the relationship between the target curvature for the target route and the steering angle, and is created in advance.

The control unit 145 controls traveling of the vehicle 1. The control unit 145 controls steering on the basis of the target steering angle calculated by the target steering angle calculation unit 144 when the vehicle 1 travels.

Note that the ECU 14 may include, for example, a target vehicle speed calculation unit, a filter processing unit, a guard processing unit, and the like in addition to the functional configurations described above.

The target vehicle speed calculation unit calculates a target vehicle speed on the basis of various types of information such as a target route, a target curvature, and a current vehicle speed.

The filter processing unit performs averaging processing (low-pass filtering processing) on the target steering angle output from the target steering angle calculation unit 144. With this averaging processing, noise is removed and the change in steering angle becomes smooth.

The guard processing unit performs guard processing of preventing the target steering angle output from the filter processing unit from exceeding a preset maximum steering angle.

FIG. 7 is a graph illustrating temporal transitions of a target curvature and a target curvature gradient according to a conventional technique. FIG. 7A is a graph of the target curvature according to the conventional technique, and FIG. 7B is a graph of the target curvature gradient according to the conventional technique. The horizontal axis represents time.

At times t1 to t8, which are times corresponding to joints of different types of lines, the target curvature gradient changes stepwise as illustrated in FIG. 7B, and the change in target curvature at that time is rapid as illustrated in FIG. 7A. Therefore, smooth steering is not achieved before and after the joint, and ride comfort may be degraded.

On the other hand, FIG. 8 is a graph illustrating temporal transitions of a target curvature and a target curvature gradient according to the embodiment. FIG. 8A is a graph of the target curvature according to the embodiment, and FIG. 8B is a graph of the target curvature gradient according to the embodiment. The horizontal axis represents time.

The smoothing processing using the average target curvature is performed in predetermined sections including joints at times t11 to t18, which are times corresponding to the joints of different types of lines, and times before and after those times. As a result, as illustrated in FIG. 8B, the target curvature gradient changes not stepwise but in an inclined manner. As illustrated in FIG. 8A, the change in target curvature at that time is smooth. Therefore, smooth steering can be achieved before and after the joint, and ride comfort can be improved.

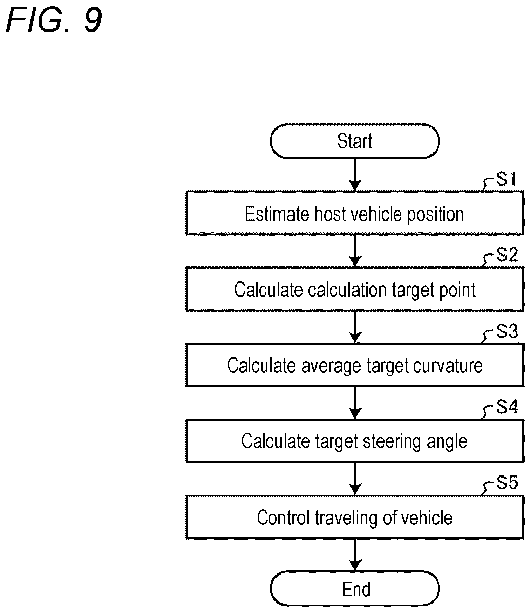

FIG. 9 is a flowchart illustrating processing performed by the vehicle control system 100 according to the embodiment. In step S1, the host vehicle position estimation unit 142 estimates the current position of the vehicle 1 using the latest position information of the vehicle 1, the detection result by the wheel speed sensor 22, and the like.

Next, in step S2, the average target curvature calculation unit 143 calculates a calculation target point (point P6 in FIG. 6).

Next, in step S3, the average target curvature calculation unit 143 calculates the average value of the target curvatures of a plurality of points (points P1 to P11) on the target route including the calculation target point (point P6 in FIG. 6) and a predetermined number of points before and after the calculation target point, thereby calculating the average target curvature for the calculation target point (point P6).

Next, in step S4, the target steering angle calculation unit 144 calculates a target steering angle on the basis of the average target curvature calculated in step S3.

Next, in step S5, the control unit 145 controls traveling of the vehicle 1 on the basis of the target steering angle calculated in step S4 and the like.

As described above, according to the present embodiment, in a case where the vehicle 1 travels along the target route, steering control is executed using the target steering angle based on the average target curvature, so that smooth steering can be achieved before and after a joint of different types of lines on the target route. That is, in the conventional technique, the steering control is executed using the target curvature of one point on the target route, but in the present embodiment, smooth steering can be achieved by executing the steering control using the target curvature calculated from the target curvatures of a plurality of points on the target route.

In addition, when the steering control using the target steering angle based on the average value or the weighted average value of the target curvature is executed at all times while the vehicle 1 is traveling, simple processing can be performed.

Furthermore, when the steering control using the target steering angle based on the average value or the weighted average value of the target curvature is executed only when necessary (that is, only when the plurality of points include a point of a joint of different types of lines on the target route), the calculation cost can be reduced.

In the case of determining the positions of the plurality of points, it is possible to determine appropriate positions of the plurality of points specifically by the calculation method described above (FIG. 6).

In addition, since the target vehicle speed is more stable than the actual vehicle speed, the calculation result can be more stable by using the target vehicle speed as the vehicle speed at the time of calculating the average target curvature. Specifically, since noise is included in the information of the actual vehicle speed, the leading position (point P6 in FIG. 6) moves back and forth, but since no noise is included in the target vehicle speed, the leading position does not move back and forth. Therefore, steering is further smoothed.

Note that the program executed by the vehicle 1 may be stored as a file in an installable format or an executable format in a computer-readable storage medium such as a CD-ROM, a CD-R, a memory card, a digital versatile disk (DVD), or a flexible disk (FD) and provided as a computer program product. Furthermore, the program may be provided by being stored on a computer connected to a network such as the Internet and downloaded via the network. Further, the program may be provided or distributed via a network such as the Internet.

Although the embodiment of the present invention has been described above, the embodiment is presented as an example, and is not intended to limit the scope of the invention. This novel embodiment can be implemented in various other forms, and various omissions, substitutions, and changes can be made without departing from the gist of the invention. This embodiment and modifications thereof are included in the scope and gist of the invention, and are included in the invention described in the claims and the equivalent scope thereof.

For example, the type of lines used to create the target route is not limited to a straight line, an arc, and a clothoid curve. Another type of lines such as an elliptic arc and an N-order function curve (N: integer equal to or more than 2) may be used.

In addition, the number of the plurality of points used to calculate the average target curvature is not limited to 11 illustrated in FIG. 6, and may be another number as long as the number is plural.

### [Summary of Present Embodiment]

The present embodiment includes at least the following configuration.

The ECU 14 (vehicle control device) that causes the vehicle 1 to travel along a target route created by connecting a plurality of types of lines includes the average target curvature calculation unit 143 (target curvature calculation unit) that calculates a smoothed value of target curvatures of a plurality of points on the target route including a calculation target point and a predetermined number of points before and after the calculation target point, any one of the points being a joint of different types of lines, in order to calculate a smoothed target curvature for the calculation target point, the target steering angle calculation unit 144 that calculates a target steering angle based on the smoothed target curvature, and the control unit 145 that controls steering based on the target steering angle when the vehicle travels.

With such a configuration, in a case where the vehicle 1 travels along the target route, steering control is executed using the target steering angle based on the smoothed target curvature, so that smooth steering can be achieved before and after the joint of different types of lines on the target route.

In addition, in the present embodiment, it is preferable that the average target curvature calculation unit 143 (target curvature calculation unit) calculate, as the smoothed target curvature, an average value of target curvatures at the plurality of points or a weighted average value of the target curvatures acquired by weighting the target curvatures at the plurality of points and calculating a weighted average value of the target curvatures.

With such a configuration, the steering control using the target steering angle based on the average value or the weighted average value of the target curvature can be executed by simple processing.

Furthermore, in the present embodiment, it is preferable that when determining positions of the plurality of points, the average target curvature calculation unit 143 (target curvature calculation unit) determine, as a position of an adjacent point, a position advanced by a distance obtained by multiplying a vehicle speed by a preset predetermined time based on the calculation target point, and repeat this calculation in order to determine the positions of the plurality of points.

With such a configuration, appropriate positions of the plurality of points can be specifically determined.

Moreover, in the present embodiment, it is preferable that the average target curvature calculation unit 143 (target curvature calculation unit) use a target vehicle speed as the vehicle speed.

Since the target vehicle speed is more stable than the actual vehicle speed, with such a configuration, the calculation result can be more stable by using the target vehicle speed as the vehicle speed.

Note that the effects of the dependent claims and the embodiment are additional effects different from the effects of the independent claims.

### REFERENCE SIGNS LIST

1: Vehicle, 10: Operation input unit, 11: Monitor device, 12: Display device, 13: EPS, 14: ECU, 100: Vehicle control system, 141: Acquisition unit, 142: Host vehicle position estimation unit, 143: Average target curvature calculation unit, 144: Target steering angle calculation unit, and 145: Control unit

## Claims

1. A vehicle control device that causes a vehicle to travel along a target route created by connecting a plurality of types of lines, the vehicle control device comprising:
a target curvature calculation unit that calculates a smoothed value of target curvatures of a plurality of points on the target route including a calculation target point and a predetermined number of points before and after the calculation target point, any one of the points being a joint of different types of lines, in order to calculate a smoothed target curvature for the calculation target point;
a target steering angle calculation unit that calculates a target steering angle based on the smoothed target curvature; and
a control unit that controls steering based on the target steering angle when the vehicle travels.

2. The vehicle control device according to claim 1, wherein the target curvature calculation unit calculates, as the smoothed target curvature, an average value of target curvatures at the plurality of points or a weighted average value of the target curvatures acquired by weighting the target curvatures at the plurality of points and calculating a weighted average value of the target curvatures.

3. The vehicle control device according to claim 2, wherein when determining positions of the plurality of points, the target curvature calculation unit determines, as a position of an adjacent point, a position advanced by a distance obtained by multiplying a vehicle speed by a preset predetermined time based on the calculation target point, and repeats this calculation in order to determine the positions of the plurality of points.

4. The vehicle control device according to claim 3, wherein the target curvature calculation unit uses a target vehicle speed as the vehicle speed.
